# EUROPEAN PATENT APPLICATION

(11) **EP 4 641 976 A1**
(43) Date of publication of application: **29.10.2025**
(21) Application number: 25164415.9
(22) Date of filing: 18.03.2025
(51) Int. Cl.: H04L 9/40, G05B 19/418, G06F 21/44, H04L 67/12

(54) **INDUSTRIAL PROCESS DEVICE FINGERPRINTING**

(30) Priority: 25.04.2024 US 202418646332
(71) Applicant: Schneider Electric Systems USA, Inc., Foxborough, MA 02035 (US)
(72) Inventor: REDMOND, James, Richmond, K0A2Z0 (CA); SOBIN, Zackery, Tryon, 28782 (US)
(74) Representative: Friese Goeden Patentanwälte PartGmbB

(57) **Abstract**

A system is configured for enabling secure communications among industrial process devices of an industrial system. The industrial system comprises industrial process devices such as an industrial peripheral device and an industrial controller device. The industrial peripheral device is configured to generate an output signal having one or more recurring physical properties. The industrial controller device is configured to operate in training mode to obtain a unique fingerprint signal from the output signal of the industrial peripheral device. The unique fingerprint signal is indicative of the one or more recurring physical properties of the output signal and corresponds to an identity of the industrial peripheral device. The industrial controller device is also configured to operate in operational mode to validate an identity of the industrial peripheral device based on the unique fingerprint signal, thereby enabling secure communications among the industrial peripheral device and industrial controller device.

## Description

### CROSS-REFERENCE TO RELATED APPLICATION

This application claims priority from United States Patent Application No. 18/646,332 filed on April 25, 2024.

### FIELD

The present disclosure generally relates to industrial process device authentication to enable secure communication between industrial process devices.

### BACKGROUND

Industrial process devices are widely used in industry to monitor and automate processes. Industrial process devices generally comprise components such as industrial controllers and industrial peripheral devices. Industrial controllers comprise computer-based devices configured for controlling devices within industrial systems such as industrial peripheral devices. Industrial peripheral devices typically comprise industrial sensors that are configured to monitor one or more parameters of industrial systems.

### SUMMARY

Aspects of the present disclosure permit an improved framework for enabling secure communications among industrial process devices. Particularly, aspects of the present disclosure provide systems and methods for enabling secure communications with legacy industrial process devices, without the need for replacing the legacy industrial process devices with modern industrial process devices.

In one aspect, a system for enabling secure communication among industrial process devices comprises an industrial peripheral device generating an output signal. The output signal has one or more recurring physical properties. An industrial controller device is configured to operate in at least one of a training mode and an operational mode. In the training mode, the industrial controller device is configured to communicate with the industrial peripheral device via a communication network to obtain a unique fingerprint signal from the output signal. The unique fingerprint signal is indicative of the one or more recurring physical properties of the output signal and corresponds to an identity of the industrial peripheral device. In the operational mode, the industrial controller device is configured to validate the identity of the industrial peripheral device based on the unique fingerprint signal.

In another aspect, a method for enabling secure communication among industrial process devices comprises obtaining as input, by an industrial controller device, a unique fingerprint signal from an industrial peripheral device. The unique fingerprint signal is indicative of one or more recurring physical properties of an output signal transmitted by the industrial peripheral device. The unique fingerprint signal is processed, by the industrial controller device, to determine and validate an identity of the industrial peripheral device based thereon. Secure communication is enabled with the industrial peripheral device.

Other objects and features will be in part apparent and in part pointed out hereinafter.

### BRIEF DESCRIPTION OF THE DRAWINGS

FIG. 1 is a schematic block diagram of an automation system, according to an embodiment.
FIG. 2 is a schematic block diagram of a remote substation of the industrial system of FIG. 1, according to an embodiment.
FIG. 3 is an illustration of a fingerprint of an industrial process device, according to an embodiment.
Corresponding reference characters indicate corresponding parts throughout the drawings.

### DETAILED DESCRIPTION

The present disclosure relates to systems and methods for authenticating industrial process devices within an industrial system. Particularly, systems and methods in accordance with the present disclosure employ an improved framework for enabling secure communications between industrial process devices in an industrial system, and for preventing unauthorized devices from interfering with the industrial system. Moreover, aspects of the present disclosure provide a cost-effective solution for promoting secure communications among less-advanced legacy industrial process devices and more-advanced industrial process devices.

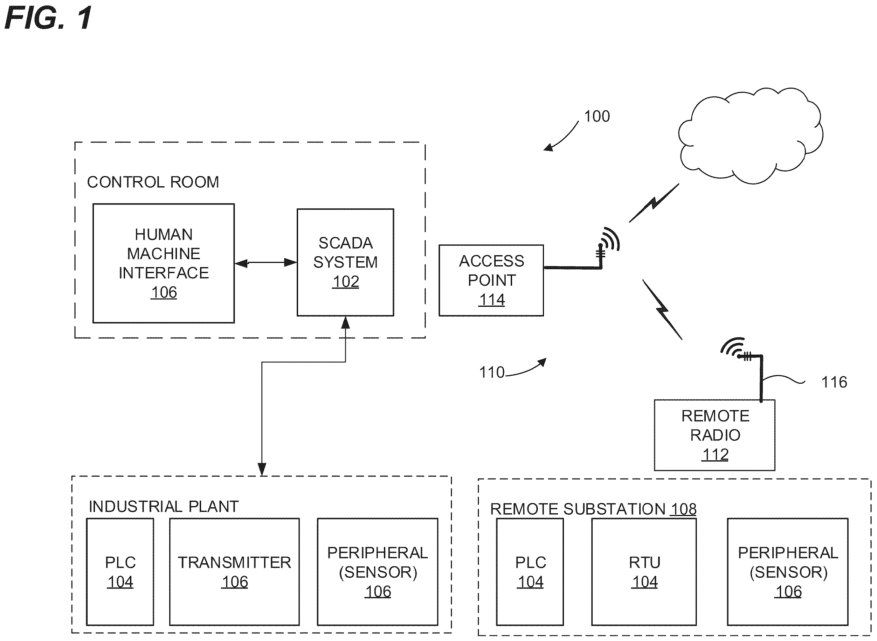

Referring to FIG. 1, a schematic overview of an industrial system in accordance with the present disclosure is generally indicated at reference number 100. The industrial system 100 includes a Supervisory Control and Data Acquisition (SCADA) system 102 configured to monitor industrial process devices including at least one of an industrial controller device 104 and an industrial peripheral device 106. Accordingly, the SCADA system 102 is configured to provide control thereof the industrial process devices via a communication network 110. Broadly the industrial controller device 104 is configured to operate in a training mode and in an operational mode to authenticate and enable secure communications with one or more of the industrial peripheral devices 106. In training mode, the industrial controller device 104 is configured to communicate with the industrial peripheral device 106 to obtain a unique fingerprint signal from the industrial peripheral device. In operational mode, the industrial controller device 104 is configured to validate the identity of the industrial peripheral device 106 based on the unique fingerprint signal to enable secure communications with the industrial peripheral device, as will be explained in greater detail below. Individual components of the industrial system 100 will now be described in further detail before turning to an exemplary method for enabling secure communications among industrial process devices.

In an exemplary embodiment, the industrial peripheral device 106 comprises a legacy device having a legacy communication protocol (e.g., serial communication protocol) comprising minimum to no security. Moreover, the one or more industrial peripheral devices 106 comprise industrial sensor devices configured to monitor one or more parameters of industrial system 100. For example, the industrial peripheral device 106 may comprise at least one of a sensor, flow meter, mass meter, gas chromatograph, pressure transmitter, Coriolis meter, multi-variable transmitter, guided wave radar, and the like. It is also contemplated that a human machine interface (HMI) is considered as an industrial peripheral device 106.

In the exemplary embodiment of FIG. 1, the SCADA system 102 is coupled to a remote substation 108 via a communication network 110, such as a private data radio network and/or a cellular telephone network. In the illustrated embodiment, the remote substation 108 and the SCADA system 102 communicate with each other via the private data radio network 110, which includes a plurality of remote radios 112 associated with one or more remote substations 108 and a base station, or access point, 114 associated with SCADA system 102. The data radios 112 and the access point 114 each have an associated antenna 116 for communicating on the network 110. The substation 108 typically includes a number of industrial peripheral devices 106. Furthermore, the substation 108 includes an industrial controller device 104 for data acquisition from substation 108 and/or from SCADA system 102. The industrial controller device 104 transmits telemetry data to SCADA system 102 and receives messages from SCADA system 102 for controlling connected physical objects of remote substation 108. Suitable data radios for use as remote radio 112 and/or access point 114 are Trio licensed Ethernet and serial data radios available from Schneider Electric. These UHF data radios provide serial and Ethernet connectivity for long range wireless data communications in a wide range of SCADA and telemetry applications. The industrial system 100, including data radios 112, may be an electrical grid automation system, a water grid network monitoring system, or the like.

Still referring to the exemplary embodiment of FIG. 1, the SCADA system 102 is also configured to communicate with industrial process devices of an industrial plant. In a SCADA-based control system, industrial controller device 104 is configured to connect to one or more of the industrial peripheral devices 106 for collecting output signals and converting the signals into digital data. The various industrial process devices are configured to communicate with SCADA system 102 according to different protocols (e.g., DNP3, Modbus, IEC-104).

Moreover, the SCADA system 102 operates in conjunction with a human-machine interface (HMI), which as described above may also be considered an industrial peripheral device 106. The HMI is an input-output device that presents process information to a human operator. In an embodiment, the HMI comprises a personal computer, smartphone, tablet, touchscreen HMI device, or the like. The SCADA system 102 links to HMI for providing maintenance procedures, detailed schematics, logistic information, trend data, diagnostic data, configuration data transfer, and the like for a specific sensor or machine. Furthermore, the SCADA system 102 may provide detected changes in the output signal of an industrial peripheral device 106 reported by the industrial controller device 104, to the HMI. Although illustrated in a control room remotely from the other various industrial peripheral devices 106, it is to be understood that HMI could be hosted on the device itself.

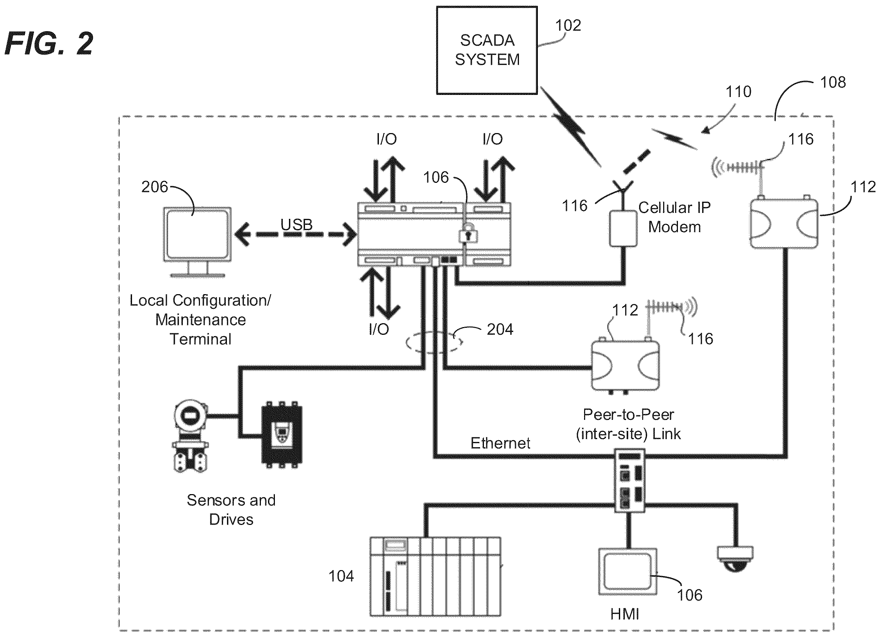

In an embodiment, the industrial peripheral device 106 is used as a control device as shown in FIG. 2. A communication bus 204 provides communication for the complete substation 108 and all parts of the substation are accordingly connected thereto, whether directly or indirectly. The industrial peripheral device 106 is configured to be connected to a computer 206 (e.g., a personal computer, desktop, laptop, workstation machine, etc.) of SCADA system 102 to access and control settings and parameters as well as a real-time database.

In an exemplary embodiment, the one or more industrial controller devices 104 comprise at least one of a remote terminal unit (RTU), a programmable logic controller (PLC), and a programmable automation controller (PAC). Moreover, the industrial controller devices 104 may each comprise a memory for storing information such as known fingerprint signals. The industrial controller devices 104 include circuit boards and/or other electronic components such as a transceiver or external connection for communicating with other devices of the industrial system 100. For example, the industrial controller devices 104 comprise components such as wireless transceivers and/or wired connectors that connect the industrial controller devices to the industrial peripheral devices 106, SCADA system 102, and external databases comprising information such as known fingerprint signals. Furthermore, the industrial controller device 104 is configured for timing critical applications for obtaining and deciphering the unique fingerprint signal from an output signal transmitted by the industrial peripheral device 106. For example, the industrial controller device 104 comprises a field programmable gate array (FPGA) that is programmed to extract one or more physical properties of the output signal transmitted by the industrial peripheral device 106 to determine the unique fingerprint signal, indicative of an identity of the industrial peripheral device.

In the training mode, the industrial controller device 104 is configured to communicate with one or more industrial peripheral devices 106 to obtain an output signal from each of the industrial peripheral devices 106. For example, the industrial controller device 104 is configured to remotely communicate with the industrial peripheral device 106 via a communication network to obtain the output signal transmitted from the industrial peripheral device. The industrial controller device 104 deciphers the output signal to determine the unique fingerprint signal of the industrial peripheral device 106. The unique fingerprint signal is indicative of one or more recurring physical properties of the output signal and corresponds to an identity of the industrial peripheral device 106, as will be explained in greater detail below.

In the operational mode, the industrial controller device 104 authenticates the industrial peripheral device 106 to determine whether to enable further communications with the industrial device. The industrial controller device 104 authenticates the industrial peripheral device 106 by validating an identity of the industrial peripheral device based on the unique fingerprint signal. In an exemplary embodiment, the industrial controller device 104 is configured to compare the unique fingerprint signal determined from the output signal transmitted by the industrial peripheral device 106, with one or more known fingerprint signals (e.g., stored within a memory of the industrial controller device or obtained from an external database), to recognize a match of the unique fingerprint signal to one of the known fingerprint signals. Accordingly, the industrial controller device 104 is configured to enable further communications with the industrial peripheral device 106 if a match is recognized, and alternatively the industrial controller device is configured to prevent further communications with the industrial peripheral device 106 if no match is recognized. It is further envisioned that the industrial controller device 104 is configured to administer a command to stop a process executed by the industrial peripheral device 106, if no match is recognized.

Still referring to the operational mode of the industrial controller device 104, the industrial controller device is configured to continuously monitor the unique fingerprint signal to detect a change in the unique fingerprint signal during operation of the industrial peripheral device 106. For example, if the industrial controller device 104 detects a change in the unique fingerprint signal of the output signal of the industrial peripheral device 106, then the industrial controller device is configured to re-validate the changed unique fingerprint signal to re-authenticate an identity of the industrial peripheral device. Suitably, the industrial controller device 104 is configured to at least one of report the detected change in the unique fingerprint signal (e.g., to the SCADA system 102), disengage communications with the industrial peripheral device 106, and stop a process of the industrial peripheral device.

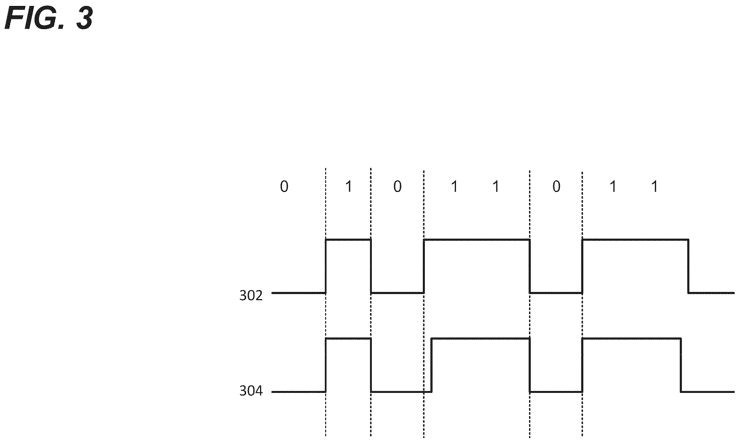

Each industrial peripheral device 106 is configured to generate and transmit an output signal having one or more recurring physical properties that are unique to each industrial peripheral device. The physical properties comprise at least one of signal jitter, slew rate, peak voltage, transient voltage, delay time, overtone, and baud rate, however other physical signal properties may be used without departing from the scope of the present disclosure. Since the physical properties are unique for each industrial peripheral device 106, the physical properties may be deciphered to determine the unique fingerprint signal of each device, thereby corresponding to device identity. In one embodiment, the unique physical properties used to determine the unique fingerprint signal of the industrial peripheral device 106, are inherent in the original configuration of the industrial peripheral device. In another embodiment, the original configuration of the industrial peripheral device 106 may be altered to alter one or more of the physical properties of the output signal to define the unique fingerprinted signal for the industrial peripheral device. For example, FIG. 3 shows an example of an original output signal 302 of the industrial peripheral device 106, and it also shows an example of an altered output signal 304 (e.g., delayed output signal) of the industrial peripheral device.

A method of enabling secure communications among industrial process devices will now be described. Prior to execution of the method, a user may optionally configure the industrial peripheral device 106 with a unique fingerprint signal by altering one or more physical properties of the output signal of the industrial peripheral device, or the original output signal of the industrial peripheral device may be used to define the unique fingerprint signal. For example, properties such as voltage and baud rate may be intentionally modified to define unique fingerprint signals for industrial peripheral devices 106. Moreover, it is envisioned that a phase of the output signal may be set to a known value. For example, atomic clock microchips may be added on both ends of an industrial peripheral device 106 to lock the phase of the signal to a known value and to detect if the phase is locked.

In order to connect the industrial peripheral device 106 to the industrial controller device 104 and the industrial system 100, the industrial peripheral device must first be authenticated. Therefore, to initiate authentication the industrial peripheral device 106 transmits the output signal to the industrial controller device 104. The industrial controller device 104 executes a learning mode, and obtains the output signal from the industrial peripheral device 106. Next the industrial controller device 104 executes an operational mode to process the output signal. In processing the output signal, the industrial controller device 104 is configured to decipher one or more recurring physical properties of the output signal to determine a unique fingerprint signal of the industrial peripheral device 106. Furthermore, the industrial controller device 104 is configured to process the unique fingerprint signal to determine and validate an identity of the industrial peripheral device 106.

In an exemplary embodiment, processing the unique fingerprint signal comprises comparing the unique fingerprint signal with one or more known fingerprint signals previously learned from industrial peripheral devices 106, to recognize a match of the unique fingerprint signal to one of the known fingerprint signals. If a match is recognized with a known fingerprint signal, then the industrial controller device 104 authenticates the industrial peripheral device 106 and enables secure communications with the industrial peripheral device. Otherwise, if a match is not recognized, the industrial controller device 104 prevents further communications with the industrial peripheral device. Moreover, the industrial controller device 104 reports the failed authentication attempt as suspicious activity to the SCADA system 102.

Once the industrial peripheral device 106 has been authenticated, the industrial controller device 104 continuously monitors output signals of the industrial peripheral device to detect a change in the unique fingerprint signal of the device. If a change is detected, then the industrial controller device 104 reports the change to the SCADA system 102. For example, if a change is detected and the change exceeds predetermined acceptable bounds, then the change is reported to the SCADA system 102. Moreover, to minimize false alerts a time delay may be implemented which requires the change to exceed the predetermined acceptable bounds for a predetermined amount of time before triggering an alert. Moreover, the industrial controller device 104 executes the operational mode to re-authenticate the industrial peripheral device 106. If during re-authentication, a match is recognized, the industrial controller device 104 permits further communications with the industrial peripheral device 106. If a match is not recognized, the industrial controller device 104 disengages communications with the industrial peripheral device 106, and optionally stops a process of the industrial peripheral device.

In another aspect of the present disclosure, a method for enabling secure communications between a secure industrial computing device (e.g., industrial controller device) and less secure legacy peripheral device (e.g., industrial peripheral device) comprises in a training mode, communicating one or more test signals between the secure industrial computing device and the less secure legacy peripheral device. Jitter (e.g., timing jitter) is added to signals received from the less secure legacy peripheral device on the secure industrial computing device to generate corresponding fingerprinted signals. The jitter is unique for each of the less secure legacy peripheral devices, and is used to identify the fingerprinted signals as being associated with a respective peripheral device of the less secure legacy peripheral device. In a normal operational mode, in response to receiving signals from an unknown device on the secure industrial computing device indicating a request to communicate with the secure industrial computing device, the signals received from the device are compared to the fingerprinted signals to determine if the signals received from the unknown device match one of the fingerprinted signals. In response to determining the signals received from the unknown device match one of the fingerprinted signals, the signals received from the unknown device are associated with the less secure peripheral device associated with the matched fingerprinted signals. Future communications are permitted between the secure industrial computing device and the less secure legacy peripheral device.

Advantageously, systems and methods in accordance with the present disclosure provide a cost-effective solution for authenticating and enabling secure communication among industrial process devices within an industrial system. Instead of having to upgrade an entire system of legacy industrial peripheral devices to more advanced industrial peripheral devices for achieving secure communication among the devices, the present disclosure utilizes inherent features such as physical properties of output signals of the legacy industrial peripheral devices to enable secure communication among devices.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

Accordingly, the present invention may also be described as follows, optionally in combination with one or more of the above-mentioned features of the present invention: a system is configured for enabling secure communications among industrial process devices of an industrial system. The industrial system comprises industrial process devices such as an industrial peripheral device and an industrial controller device. The industrial peripheral device is configured to generate an output signal having one or more recurring physical properties. The industrial controller device is configured to operate in training mode to obtain a unique fingerprint signal from the output signal of the industrial peripheral device. The unique fingerprint signal is indicative of the one or more recurring physical properties of the output signal and corresponds to an identity of the industrial peripheral device. The industrial controller device is also configured to operate in operational mode to validate an identity of the industrial peripheral device based on the unique fingerprint signal, thereby enabling secure communications among the industrial peripheral device and industrial controller device.

## Claims

1. A system for enabling secure communication among industrial process devices, the system comprising:
an industrial peripheral device generating an output signal, the output signal having one or more recurring physical properties; and
an industrial controller device configured to operate in at least one of a training mode and an operational mode, wherein in the training mode, the industrial controller device is configured to communicate with the industrial peripheral device via a communication network to obtain a unique fingerprint signal from the output signal, the unique fingerprint signal being indicative of the one or more recurring physical properties of the output signal and corresponding to an identity of the industrial peripheral device, and wherein in the operational mode, the industrial controller device is configured to validate the identity of the industrial peripheral device based on the unique fingerprint signal.

2. The system as set forth in claim 1, wherein the industrial peripheral device comprises a legacy device, and optionally wherein the industrial peripheral device communicates according to a legacy communication protocol comprising minimum to no security.

3. The system as set forth in any one of claims 1-2, wherein the industrial peripheral device comprises at least one of an industrial sensor device or human machine interface, and wherein the industrial sensor device comprises at least one of a flow meter, mass meter, gas chromatograph, pressure transmitter, Coriolis meter, multi-variable transmitter, or guided wave radar, and wherein the industrial controller device comprises at least one of a remote terminal unit, programmable logic controller, or programmable automation controller.

4. The system as set forth in any one of claims 1-3, wherein the industrial controller device is configured to remotely communicate with the industrial peripheral device to obtain the unique fingerprint signal.

5. The system as set forth in any one of claims 1-4, wherein the industrial controller device comprises a field programmable gate array programmed to extract the one or more physical properties of the output signal.

6. The system as set forth in any one of claims 1-5, wherein in the operational mode, the industrial controller device is configured to continuously monitor the unique fingerprint signal to detect a change in the unique fingerprint signal during operation of the industrial peripheral device.

7. The system as set forth in claim 6, wherein the industrial controller device is configured to at least one of report the detected change in the unique fingerprint signal, disengage communications with the industrial peripheral device, or stop a process of the industrial peripheral device.

8. The system as set forth in any one of claims 1-7, wherein the one or more physical properties of the output signal comprise at least one of a jitter, a slew rate, a peak voltage, a transient voltage, a delay time, an overtone, and a baud rate.

9. The system as set forth in claim 8, wherein the one or more physical properties of the output signal are altered to define the unique fingerprinted signal.

10. A method for enabling secure communication among industrial process devices, the method comprising:
obtaining as input, by an industrial controller device, a unique fingerprint signal from an industrial peripheral device, wherein the unique fingerprint signal is indicative of one or more recurring physical properties of an output signal transmitted by the industrial peripheral device;
processing the unique fingerprint signal, by the industrial controller device, to determine and validate an identity of the industrial peripheral device based thereon; and
enabling secure communication with the industrial peripheral device.

11. The method as set forth in claim 10, further comprising altering the one or more physical properties of the output signal transmitted by the industrial peripheral device to create the unique fingerprint signal.

12. The method as set forth in any one of claims 10-11, wherein processing the unique fingerprint signal comprises comparing the unique fingerprint signal with one or more known fingerprint signals to recognize a match of the unique fingerprint signal to one of the known fingerprint signals.

13. The method as set forth in claim 12, further comprising at least one of preventing communication with the industrial peripheral device if no match is recognized, or reporting suspicious activity if no match is recognized.

14. The method as set forth in any one of claims 10-13, further comprising continuously monitoring the unique fingerprint signal to detect a change in the unique fingerprint signal.

15. The method as set forth in claim 14, further comprising at least one of reporting the detected change in the unique fingerprint signal, disengaging communications with the industrial peripheral device, or stopping a process of the industrial peripheral device, if a change in the unique fingerprint signal is detected.
